Europäisches Patentamt

European Patent Office

Office européen des brevets

(19)

(11) Publication number : **0 456 420 A1**

## (12) EUROPEAN PATENT APPLICATION

(21) Application number : **91303996.2**

(22) Date of filing : **02.05.91**

(51) Int. Cl.⁵ : **B25J 21/02, B01L 1/04, F24F 3/16**

(30) Priority : **07.05.90 IE 1164/90**
**07.05.90 IE 1644/90**
**17.09.90 IE 3358/90**

(43) Date of publication of application :
**13.11.91 Bulletin 91/46**

(84) Designated Contracting States :
**AT BE CH DE DK ES FR GB GR IT LI LU NL SE**

(71) Applicant : **HORTOTEC( IRELAND) LIMITED**
**1 St. James Place**
**Fermoy, Cork (IE)**

(72) Inventor : **Morrissey, William**
**Muskry Lodge, Foxfort**
**Bansha, County Tipperary (IE)**

(74) Representative : **Bridge-Butler, Alan James et al**
**G.F. REDFERN & CO. High Holborn House**
**52/54 High Holborn**
**London WC1V 6RL (GB)**

(54) **A safety cabinet.**

(57)    A safety cabinet (1) is portable and comprises a main housing (4) supported on a support housing (5). The main housing (4) defines a substantially spherical working chamber (18) within which the negative pressure is created and within which tests or experiments may be carried out. A fan (51) draws air through a main filter (63) through ducts (56) and (54) from the working chamber (18) and delivers the filtered air through a conduit (58) and an exhaust outlet (50). Access openings (23) provide hand access to the working chamber (18). The main housing (4) comprises a pair of substantially hemispherical shells (6) and (7) of transparent plastics material joined by a hoop (16) which engages flanges (9) and (15) of the shells (6) and (7).

EP 0 456 420 A1

Jouve, 18, rue Saint-Denis, 75001 PARIS

Fig 1

Fig 4

The present invention relates to a safety cabinet of the type comprising a housing defining a working chamber within which a negative pressure is created relative to atmosphere.

In laboratories and the like, it is frequently necessary to carry out tests, experiments and the like on hazardous materials, for example, materials which give off hazardous or poisonous waste or fumes. It is important that the individual carrying out a test on such hazardous materials is protected from waste and fumes and the like resulting from the test. In practice, fume hoods and the like are provided in laboratories to protect an individual carrying out a test. However, such hoods, in general, are of relatively large size and are generally built in a fixed position in the laboratory. They are unsuitable for carrying out single experiments on a relatively small scale, and by virtue of the fact that they are fixed in the laboratory, it is necessary that the test should be carried out in the laboratory.

There is therefore a need for a safety cabinet which overcomes these problems. The present invention is directed towards providing such a safety cabinet.

The invention overcomes the problems of known devices by providing a safety cabinet which comprises a housing defining a working chamber within which a negative pressure is created relative to atmosphere, wherein the housing is portable, and the housing defines a substantially enclosed working chamber and is constructed at least partly of transparent material for facilitating visual inspection of the working chamber, and the cabinet comprises first port means communicating with the working chamber, second port means communicating with atmosphere, communicating means communicating the first port means and the second port means, air transfer means being provided in the communicating means for withdrawing air from the working chamber and delivering the air through the second port means for creating the negative pressure in the working chamber, main filter means being provided in the communicating means for filtering air passing through the communicating means, and access means being provided in the housing to the working chamber for accommodating a hand or the like.

The advantages of the invention are many. A particularly important advantage of the invention is that by virtue of the fact that the safety cabinet is portable, it can be moved from place to place either within a laboratory or indeed outside a laboratory for carrying out tests at any convenient location. By virtue of the fact that the working chamber is substantially enclosed, the individual carrying out the test is protected from hazardous waste, fumes or the like from the material being tested. Furthermore, by virtue of the fact that the air transfer means withdraws air from the working chamber and creates a negative pressure in the working chamber relative to atmosphere, the individual is protected from waste, fumes and the like from the material being tested. This is particularly important where a test is being carried out on a hazardous material. Furthermore, by virtue of the fact that the filter means filters the air prior to being delivered from the second port means, the air being delivered to atmosphere has, in general, been cleaned and does not present a hazard.

By virtue of the fact that access means are provided to the working chamber, an individual carrying out the test can handle or manipulate the materials being tested while the test is in progress in the working chamber.

In one embodiment of the invention, the main filter means is mounted in the communicating means intermediate the air transfer means and the first port means.

The advantage of this feature of the invention is that the air from the working chamber is filtered prior to reaching the air transfer means.

In another embodiment of the invention, the main filter means is a filter provided to British standard 5726:1978.

The advantage of this feature of the invention is that it provides particularly good filtration of the air.

In another embodiment of the invention, the communicating means comprises a duct extending between the air transfer means and the first port means, the main filter means being releasably mounted in the duct, an opening being provided to the duct for replacing the main filter means, and a closure member releasably and sealably closing the said opening in the duct.

The advantage of this feature of the invention is that it provides a relatively convenient and inexpensive construction of cabinet.

In a further embodiment of the invention, a sensor means is provided in the communicating means for monitoring air flow through the communicating means for determining the condition of the main filter means, and alerting means are provided for indicating that the main filter means requires replacement, the alerting means being responsive to the sensor means.

The advantage of this feature of the invention is that on the alerting means being activated, an individual using the cabinet is appraised of the fact that the filter requires cleaning or replacing.

In another embodiment of the invention, the air transfer means comprises a fan, the fan being driven by an electric motor.

The advantage of this feature of the invention is that it provides a relatively efficient construction of cabinet.

In a further embodiment of the invention, a control means for controlling the electric motor is provided, the control means being responsive to the sensor means for varying the speed of the motor in response to a variation in air velocity passing through the communicating means.

The advantage of this feature of the invention is that it provides that air is drawn from the working chamber at a relatively constant rate.

In another embodiment of the invention, the access means comprises an access opening formed in the housing to the working chamber, and a sleeve extends from the access opening into the working chamber and sealably closes the access opening, the sleeve terminating in a glove.

The advantage of this feature of the invention is that it provides a relatively convenient construction of cabinet, and furthermore, the individual carrying out the tests is isolated from the working chamber.

In another embodiment of the invention, the housing comprises third port means, the third port means communicating with the working chamber, and a secondary filter means being provided in the third port means.

The advantage of this feature of the invention is that, as well as providing a convenient construction of cabinet, it also provides a relatively clean environment in the working chamber.

In a still further embodiment of the invention, the housing comprises a main housing, and a support housing supporting the main housing, the main housing forming the working chamber and being of substantially spherical shape, the support housing housing the air transfer means and the main filter means.

The advantage of this feature of the invention is that it provides a relatively convenient, efficient and reliable construction of cabinet.

The invention will be more clearly understood from the following description of some preferred embodiments thereof, given by way of example only, with reference to the accompanying drawings, in which:

Fig. 1 is a front perspective view of a safety cabinet according to the invention,

Fig. 2 is a perspective view of the cabinet of Fig. 1 from the rear,

Fig. 3 is a front perspective exploded view of the cabinet of Fig. 1,

Fig. 4 is a cross sectional side view of portion of the cabinet of Fig. 1,

Fig. 5 is a cross sectional rear view of portion of the cabinet on the line V-V of Fig. 4,

Fig. 6 is a sectional plan view of portion of the cabinet on the line VI-VI of Fig. 4,

Fig. 7 is an exploded perspective view of a detail of the cabinet of Fig. 1,

Fig. 8 is a perspective view of another detail of the cabinet of Fig. 1,

Fig. 9 is a circuit diagram of a control circuit of the cabinet of Fig. 1,

Fig. 10 is a rear perspective view of a cabinet according to another embodiment of the invention, and

Fig. 11 is a sectional side view of a detail of the cabinet of Fig. 11.

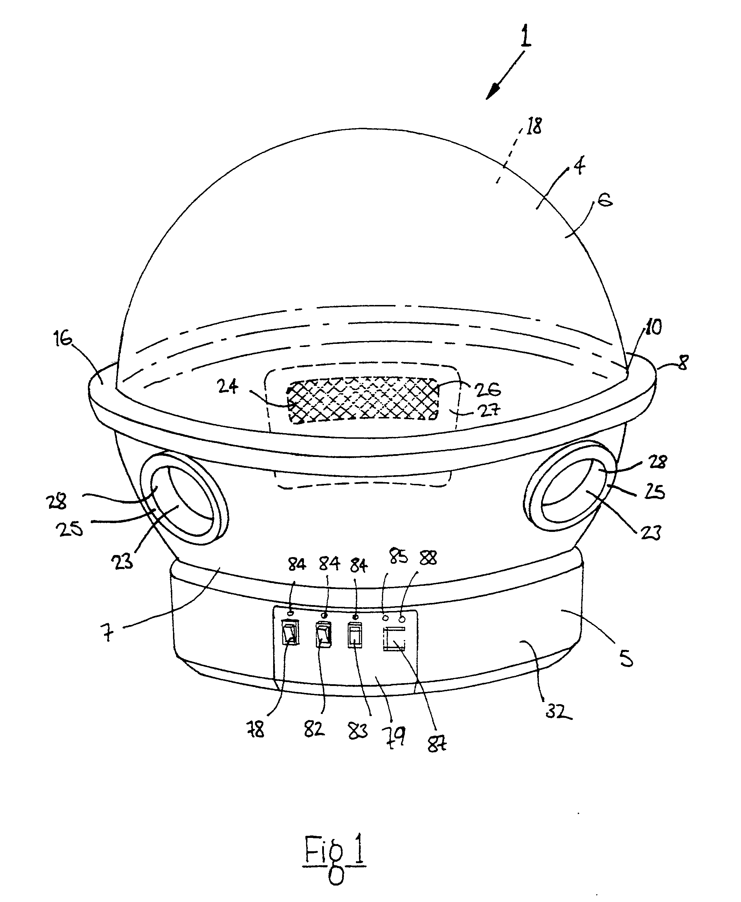

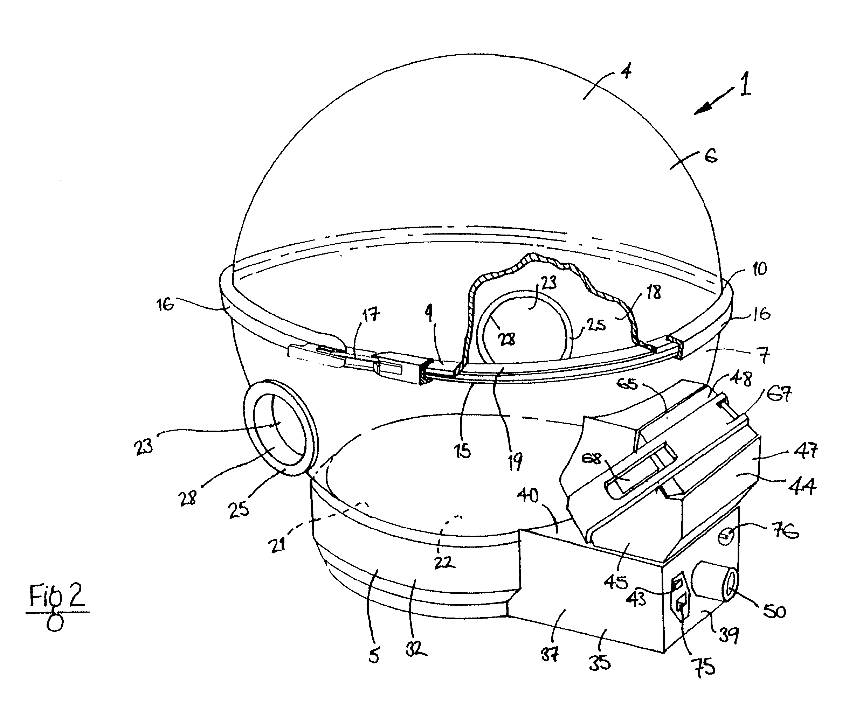

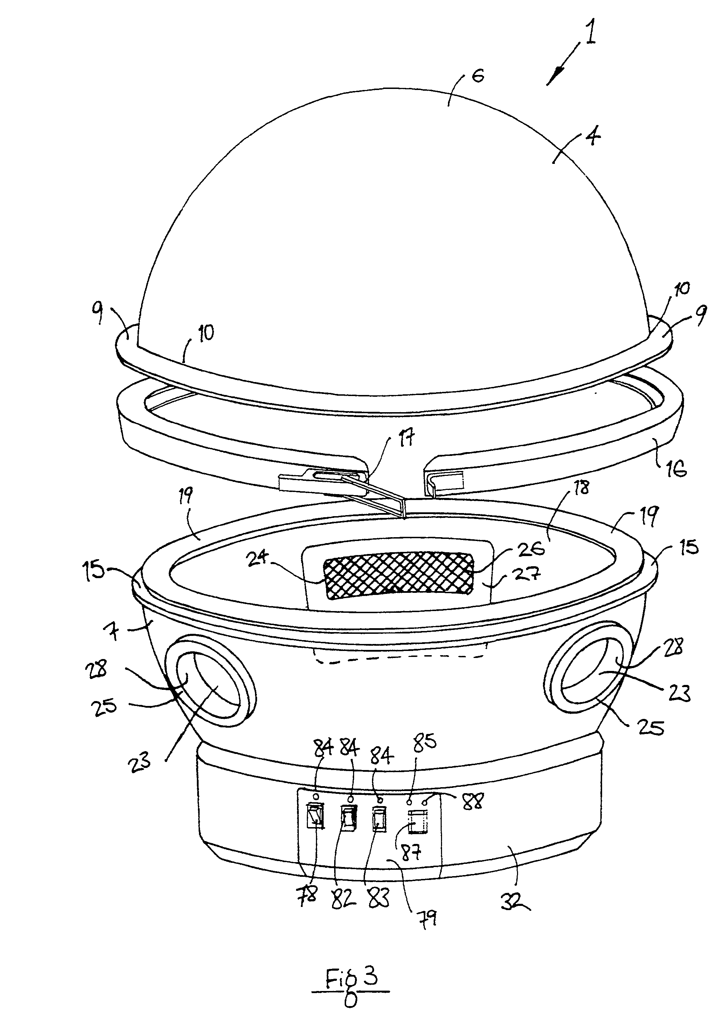

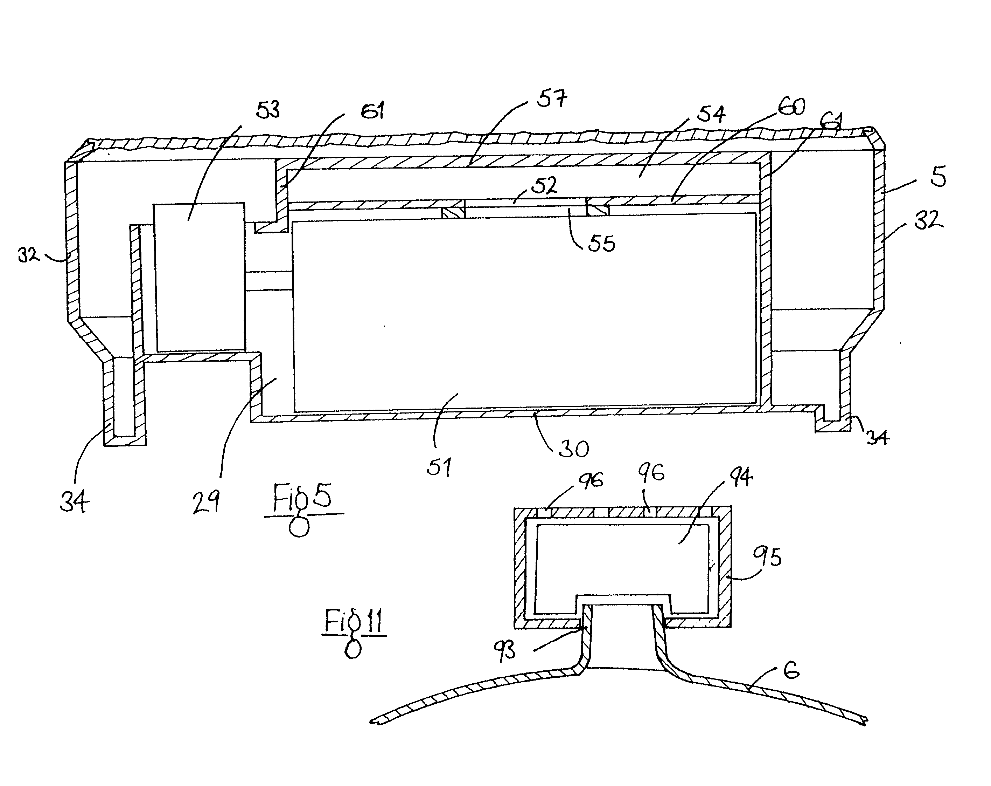

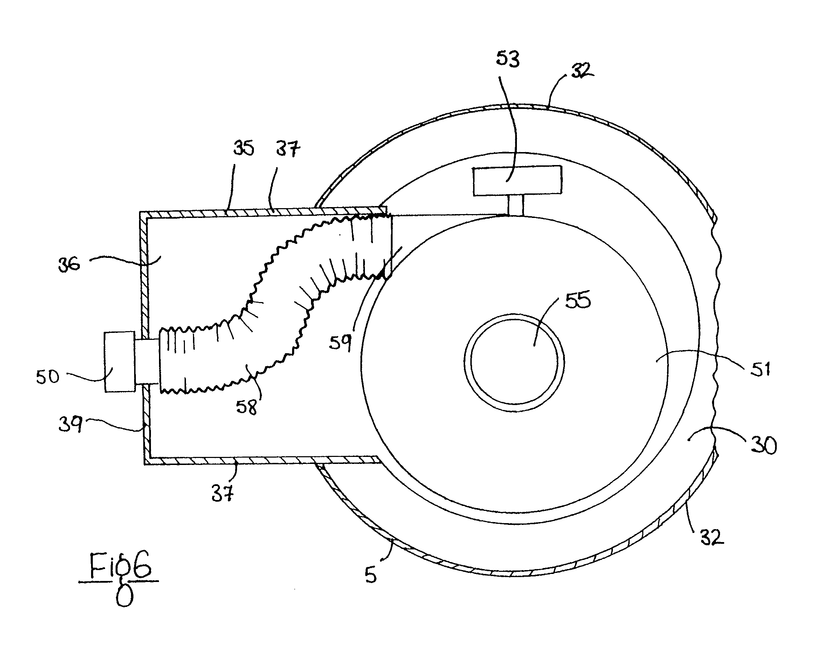

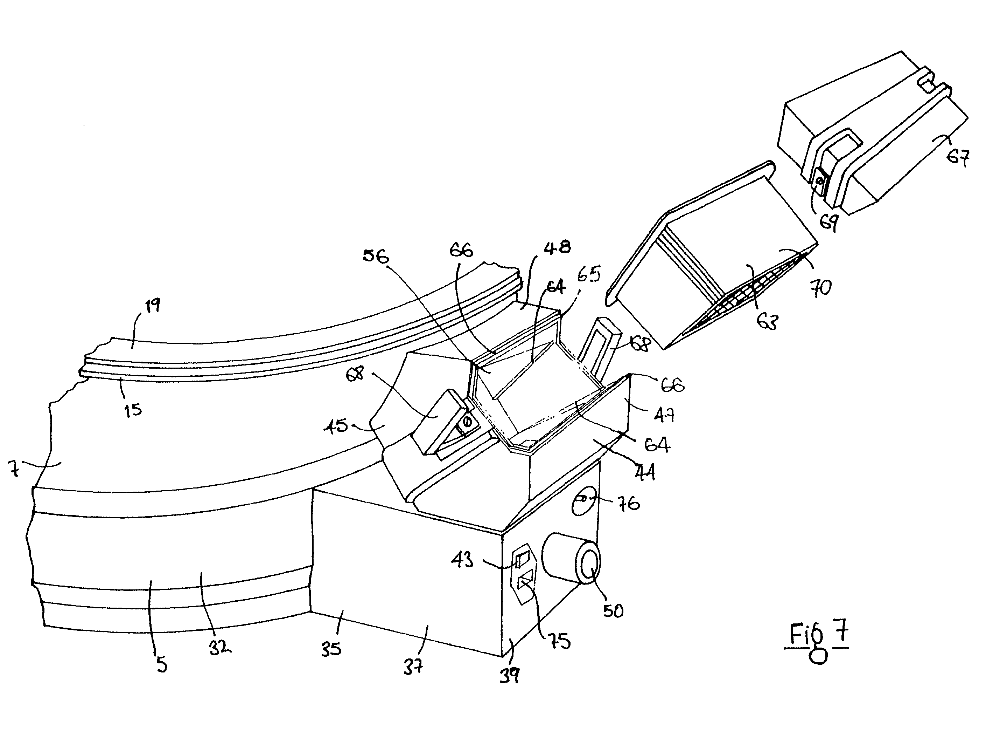

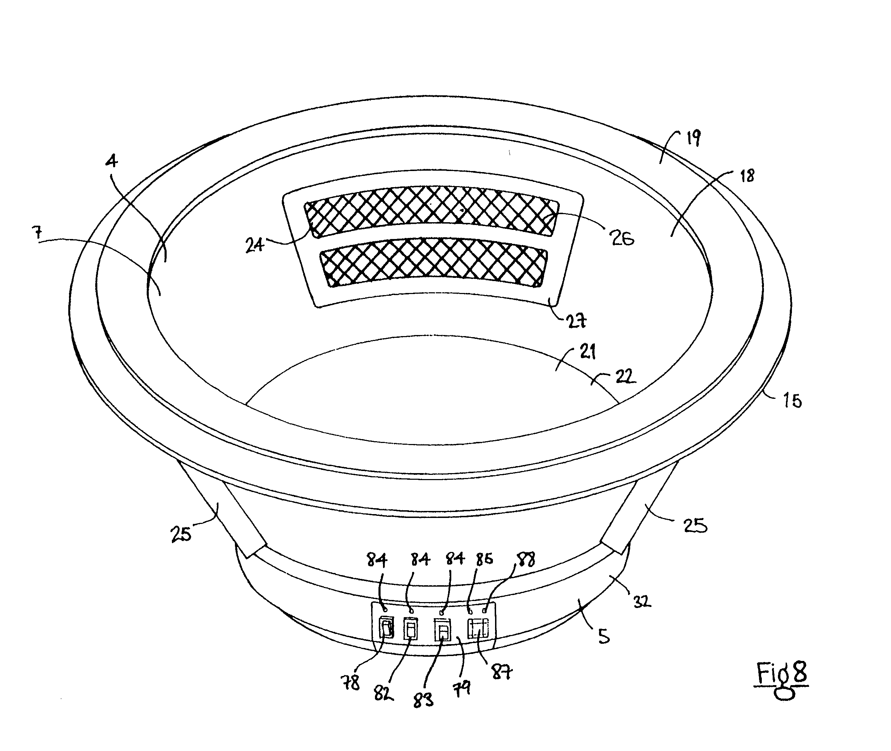

Referring to the drawings, and initially to Figs. 1 to 9, there is illustrated a safety cabinet according to the invention indicated generally by the reference numeral 1 within which experiments may be safely undertaken. The cabinet 1 is of size and shape to be portable. The cabinet 1 comprises a housing which comprises a main housing 4 and a support housing 5 on which the main housing 4 is supported.

The main housing 4 is of transparent plastics material and is formed in two parts, namely, an upper shell 6 and a lower shell 7 which are releasably joined at 8. The upper shell 6 is of hemispherical shape having an outwardly extending flange 9 extending around the periphery 10 thereof. The lower shell 7 is of partly hemispherical shape having a flat base 12. An outwardly extending flange 15 extends circumferentially around the lower shell 7 for engaging the flange 9 of the upper shell 6 for securing the upper and lower shells 6 and 7 together. A hoop 16 of U-shape cross section extends round the flanges 9 and 15 for engaging and retaining the flanges 9 and 15 secured together. A toggle clip 17 in the hoop 16 secures the hoop 16 to the flanges 9 and 15. A gasket 19 extending around the flange 15 sealably engages the flange 9 of the upper shell 6. The upper and lower shells 6 and 7 when secured together define a hollow interior working chamber 18 of partly spherical shape within which a negative pressure is created relative to atmosphere, as will be described below, and within which tests and experiments may be undertaken. A base plate 21 of translucent material rests on the flat base 12 of the lower shell 7 and forms a work surface 22 on which tests, experiments and the like may be carried out. Access means comprising a pair of hand access openings 23 are provided towards the front of the cabinet 1 in the lower shell 7 for accommodating a hand or the like into the working chamber 18 to facilitate handling of the materials being tested during a test. Cowls 25 having bores 28 extending therethrough for accommodating the hand or the like of an individual extend around the periphery of the openings 23. Each cowl 25 sealably engages the lower shell 7 around the periphery of the opening 23. First port means communicating with the working chamber 18 comprises an outlet opening 24 in the lower shell 7 for providing the negative pressure in the working chamber 18, as will be described below. A permeable sheet of gauze 26 extends over the opening 24, and is secured in position over the opening 24 by a frame 27 bonded to the interior of the lower shell 7 adjacent the outlet opening 24.

Returning now to the support housing 5, the support housing 5 is of injection moulded opaque plastics material and defines a hollow interior region 29. The support housing 5 comprises a base 30 and an upstanding partly circular side wall 32 extending upwardly from the base 30. A support rim 33 extends inwardly from the side wall 32 for supporting the flat base 12 of the lower shell 7 of the main housing 4. Screws (not shown) secure the flat base 12 to the support rim 33.

Support members 34 extending downwardly from the base 30 support the cabinet 1 on a work bench or the like. A sub-housing 35 extends rearwardly from the support housing 5 at the rear thereof, and comprises a base 36 extending from the base 30, and a pair of side walls 37 extending upwardly from the base 36 and from the side wall 32. An end wall 39 extends from the base 36 between the side walls 37. A top wall 40 extends outwardly from the side wall 32 between the side walls 37 of the sub-housing 35.

A filter housing 44 extends from the sub-housing 35 to the lower shell 7 and communicates with the outlet opening 24 as will be described below. The filter housing 44 comprises side walls 45 joined by front and rear end walls 46 and 47 and a top wall 48. An opening 49 in the top wall 40 of the sub-housing 35 communicates the filter housing 44 with the interior region 29 of the sub-housing 35, as will be described below.

Second port means comprising an exhaust outlet 50 is mounted in and extends rearwardly through the end wall 39 of the sub-housing 35. Air transfer means for withdrawing air from the working chamber 18 to create a negative pressure in the working chamber 18 relative to atmosphere comprises a fan 51 which is mounted in the interior region 29 of the support housing 5 on the base 30. The fan 51 is a tangential centrifugal fan. Communicating means communicates the outlet opening 24 in the lower shell 7 with the exhaust outlet 50 through the fan 51 for withdrawing air from the working chamber 18. The communicating means comprises a duct 54 extending from an inlet 55 into the fan 51 through the interior region 29 of the support housing 5 and into the sub-housing 35. A duct 56 through the filter housing 44 communicates the duct 54 with the outlet opening 24 in the lower shell 7 through the opening 49 in the top wall 40 of the sub-housing 35. A flexible conduit 58 in the interior region 29 of the sub-housing 5 connects an outlet 59 from the fan 51 to the exhaust outlet 50. The duct 54 is formed between a top wall 57 of the support housing 5 and the top wall 40 of the sub-housing 35 and an intermediate wall 60 extending through the support housing 5 and the sub-housing 35. Side walls 61 in the support housing 5 and the side walls 37 of the sub-housing 35 define the sides of the duct 54. The ends of the duct 54 are closed by an end wall 62 in the support housing 5 and the end wall 39 of the sub-housing 35. An opening 52 in the intermediate wall 60 communicates the duct 54 with the inlet 55 to the fan 51. The duct 56 is formed by the side walls 45, the front and rear walls 46 and 47 and the top wall 48 of the filter housing 44.

When the lower shell 7 is secured in the support rim 33 of the support housing 5, the filter housing 44 sealably engages the lower shell 7 around the outlet opening 24. An electrically powered motor 53 mounted on the base 30 in the interior region 29 of the support housing 5 drives the fan 51 through a drive transmission (not shown). Such drive transmissions will be well known to those skilled in the art. The fan and motor are sized to give a fan capacity of twenty cubic meters per hour against a static pressure of 400 pascals. In this embodiment of the invention, when the fan is operated against a back pressure of the order of 130 to 150 pascals, the fan draws approximately sixty-eight cubic meters per hour from the working chamber 18.

Main filter means for filtering the air as it is withdrawn from the working chamber 18 comprises a main filter 63 releasably mounted in the duct 56 in the filter housing 44. The main filter 63 extends transversely of the duct 56 so that all air passing through the duct 56 passes through the main filter 63. Guide rails 64 on the side walls 45 of the filter housing 44 guide and retain the main filter 63 in position in the duct 56. An opening 65 in the top wall 48 of the filter housing 44 provides access to the duct 56 for removing and replacing the main filter 63. Lips 66 extending round the opening 65 sealably engage a closure member 67 for closing the opening 65. Toggle clips 68 on the side walls 45 engage lugs 69 on the closure member 67 for securing the closure member 67 against the lips 66.

In this embodiment of the invention, the main filter 63 is an activated carbon filter mounted in a cartridge 70. The main filter 63 is rated to remove particles of 0.3 microns and greater from the air with an efficiency of 99.997%. Needless to say, other filter mediums besides activated carbon may be used, for example, a treated activated carbon may be used, or the filter may be a composite filter, for example, the filter may be provided by a pleated HEPA filter constructed to British standard 5726;1979 which would also be provided with a prefilter. A combination of any of these filters may also be used.

A light 71 is mounted in the interior region 29 of the support housing 5 beneath the flat base 12 of the lower shell 7 for illuminating the interior of the working chamber 18. A lamp holder 72 mounted in the interior region 29 of the support housing 5 engages the light 71.

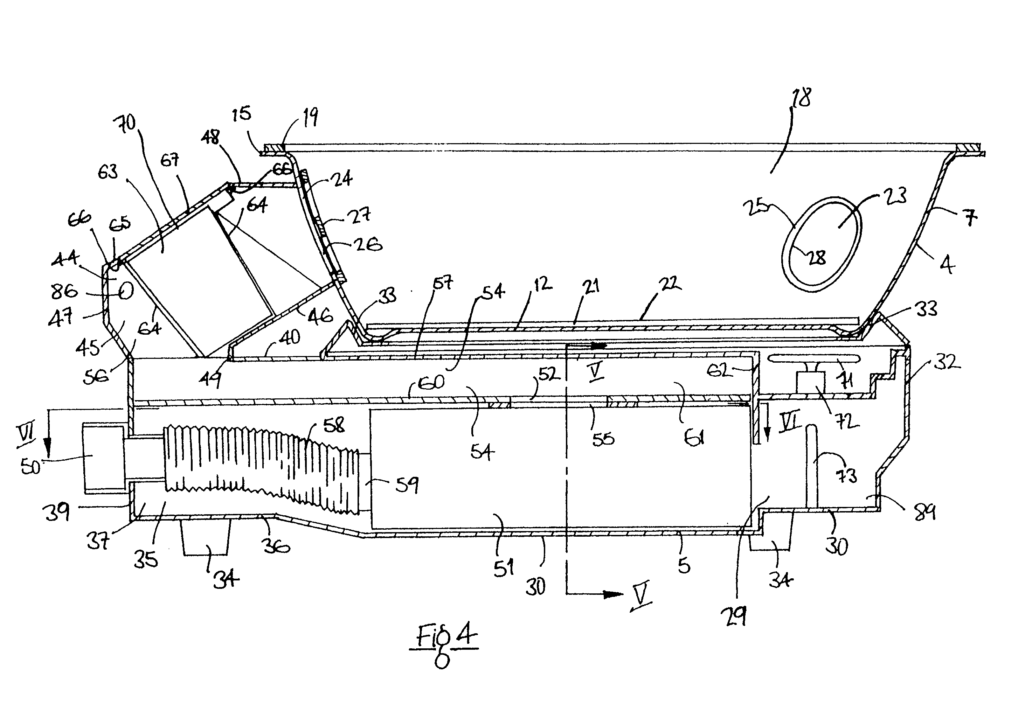

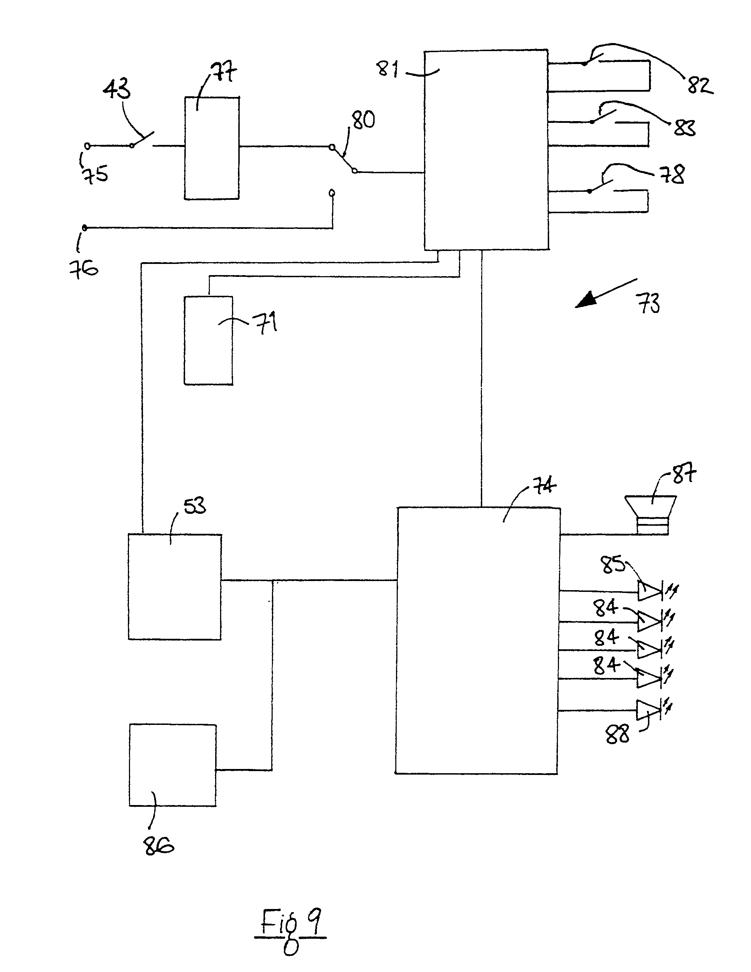

A control circuit 73 for controlling the operation of the cabinet 1 is mounted in the interior region 29 of the support housing 5. The control circuit 73 is mounted in a cavity 89 which is formed towards the front of the support housing 5. The control circuit 73 is illustrated by the block 73 in fig. 4, and a circuit diagram of the control circuit 73 is illustrated in fig. 9. The control circuit 73 comprises a microprocessor 74 which controls the operation of the circuit 73. The circuit 73 is powered by a twelve volt DC supply which may be provided from AC mains or from an independent twelve volt DC supply. A socket 75 in the end wall 39 of the sub-housing 35 receives an AC mains supply, while a socket 76 also in the end wall 39 receives a twelve volt DC supply. The AC supply is fed from the socket 75 to a transformer 77 in the control circuit 73 through a mains switch 43. The mains switch 43 is mounted in the end wall 39 of the sub-housing 35. The transformer 77 steps the AC mains voltage down to twelve volts and delivers a twelve volt DC supply. A selector switch 80 is provided in the control circuit 73 and selects between the AC mains supply and the independent twelve volt DC supply as is described below. Power is delivered from the power source selected by the selector switch 80 to a switch mode power supply unit 81. Such power supply units will be well known to those skilled in the art. A main control switch 78 switches on and off the control circuit 73 through the power supply unit 81. The main control switch 78 is mounted on a control panel 79 in the wall 32 to the front of the cabinet 1. Switches 82 and 83 on the control panel 79 control the operation of the light 71 and the motor 53 for powering the fan 51, respectively, through the power supply unit 81 and the micro-processor 74. Light emitting diodes 84 on the control panel 79 indicate the status of the switches 78, 82 and 83. The selector switch 80 switches from the transformer 77 to the socket 76 in the event of power failure to the transformer 77. Accordingly, should power being delivered into the socket 75 fail, if a DC supply is connected to the socket 76, this is substantially instantaneously connected to the power supply unit 81 through the selector switch 80.

The micro-processor is programmed to maintain the motor 83 running for a predetermined period of time after the switch 83 has been switched off so that the working chamber 18 is fully purged after a test has been completed and is ready for the next test. The predetermined period of time may be any suitable time period, however, it has been found that a time period of five minutes is adequate in most cases. A light emitting diode 85 on the control panel 79 indicates if the working chamber 18 was not purged after a previous test, for example, if the mains switch 43 was switched off simultaneously with the switch 83 or prior to the period of purging being completed. The light emitting diode 85 is powered when the main control switch 78 is switched on to prepare for the next test, thus indicating to an individual that purging after the previous test had not taken place or had not been completed. This thus enables an individual to run the motor 83 for purging the working chamber 18 prior to commencing a test.

Sensor means for monitoring the condition of the main filter 63 comprises a thermistor 86 mounted in the duct 56 of the filter housing 44 downstream of the main filter 63. The thermistor 86 monitors the temperature of the air which is fed back to the micro-processor 74. The micro-processor 74 is programmed to determine the air velocity and air pressure of the air downstream of the filter 63 from the signals received from the thermistor 86. The micro-processor 74 is also programmed to act as a control means for varying the speed of the motor 53 in response to a variation in velocity of the air passing through the duct 56. In this case, on the velocity of the air falling below a certain predetermined level, the micro-processor increases the speed of the motor 53 to maintain the air velocity at or just above the predetermined level. In practice, as the filter begins to collect particles, greater fan speed is required to maintain adequate air flow from the working chamber 18. The micro-processor 74 is also programmed to activate an alerting means, in this case, a buzzer 87 and a light emitting diode 88 both mounted in the control panel 79 for indicating that the main filter 63 requires replacing or cleaning. On the micro-processor 74 determining that the speed of the motor 53 has been increased to a certain predetermined speed in order to maintain the predetermined air flow from the working chamber 18, the buzzer 87 and light emitting diode 88 are activated to indicate that the filter 63 requires replacement or cleaning.

The exhaust outlet 50 is adapted for connecting to a central extraction network in a building for extracting air delivered through the exhaust outlet 50 and for delivering the air externally of the building or into suitable scrubbing apparatus or the like. However, in general, it is envisaged that the main filter 63 will clean the air sufficiently prior to delivery through the exhaust outlet 50 to avoid the need for connecting the exhaust outlet 50 to a central extraction network. In general, it is envisaged that the cabinet 1 will be used with the exhaust outlet 50 delivering the air withdrawn from the working chamber 18 directly into the room. In fact, an advantage of providing the exhaust outlet 50 to the rear of the cabinet 1 is that any unpleasant fumes which may be delivered through the exhaust outlet 50 are directed away from the individual carrying out the tests or experiments. Further, it is envisaged that the exhaust outlet 50 may be connected to a conduit or duct which would deliver the exhaust air from the exhaust outlet 50 through a window or other opening from a room in which the cabinet 1 is being used.

The fan 51 and motor 53 are sized to provide an air velocity of 0.7 meters per second away from the operator through the access openings 23. Although, needless to say, it will be appreciated that air velocities greater or less than 0.7 meters per second may be provided.

In use, the material to be tested or experimented on is placed on the base plate 21 either through the hand access openings 23 or by removing the upper shell 6 from the lower shell 7. The upper and lower shells 6 and 7 are secured by the hoop 16. With the cabinet 1 connected to a mains supply through the socket 75, the switches 43 and 78 are switched on.

The switch 83 is switched on to activate the fan 51 for creating the negative pressure environment in the working chamber 18. If it is desired, the light 71 is switched on by the light switch 82. The fan 51 remains on during the period of the test or experiment, thereby continuously providing the negative pressure environment in the working chamber 18. While the fan 51 is operational, air is withdrawn from the working chamber 18 and made up through the access openings 23, thereby maintaining the negative pressure environment in the working chamber 18. On completion of the test, the fan 51 is switched off using the switch 83 and the material being tested may then be removed from the working chamber 18. The micro-processor 74 keeps the motor 53 running for a predetermined period of time for operating the fan 51 to purge the working chamber 18, so that the working chamber 18 will then be ready for the next test. If desired, during the tests the exhaust outlet 50 may be connected to a central fume extraction network.

Should the thermistor 86 detect a drop in velocity of air below a predetermined level in the duct 56, the micro-processor 74 speeds up the motor 53 to maintain the air speed at or above the predetermined velocity. Should the motor speed be increased to a certain predetermined speed, indicating that the main filter 63 requires cleaning or replacement, the micro-processor 74 activates the light emitting diode 88 and the buzzer 87, thereby indicating to an individual using the cabinet 1 the status of the main filter 63. On the main filter 63 requiring replacement, the main filter 63 is removed by removing the closure member 67 from the opening 65. A new filter 63 is then replaced in the duct 56 and the closure member 67 secured in the opening 65.

In the event of a power failure of the mains power supply to the socket 75, the selector switch 80 connects the power supply unit 81 directly to the socket 76. Accordingly, where a DC supply is connected to the socket 76, the cabinet continues operating even in the event of a power supply failure.

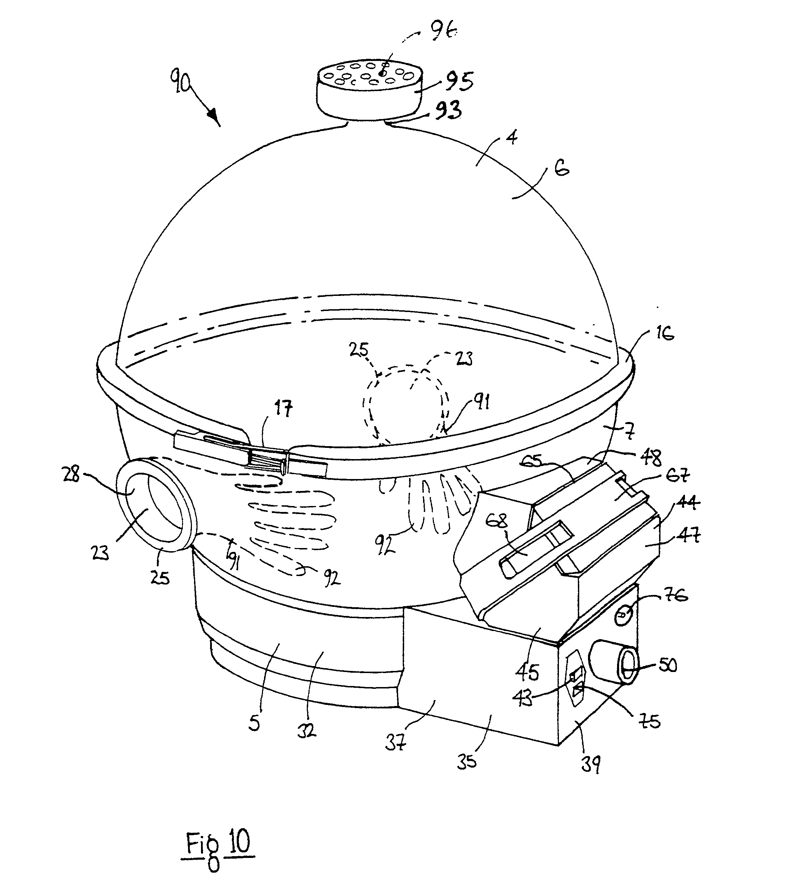

Referring now to Figs. 10 and 11, there is illustrated a portable safety cabinet according to another embodiment of the invention indicated generally by the reference numeral 90. The cabinet 90 is substantially similar to the cabinet 1 and similar components are identified by the same reference numeral. The main difference in this cabinet 90 and the cabinet 1 is that sleeves 91 sealably engage the cowls 25 around the hand access openings 23 and extend into the working chamber 18. The sleeves 91 terminate in gloves 92, thereby isolating the working chamber 18 from atmosphere through the openings 23. An individual wishing to handle or manipulate materials in the working chamber 18 inserts their hands into the gloves 92 and thereby direct contact with the material being tested is avoided. A third port means comprising an inlet 93 is provided adjacent the top of the upper shell 6 to permit air to be drawn into the working chamber 18. A secondary filter 94 is provided in a cap 95 which releasably and sealably engages the inlet 93 for filtering air being drawn in through the inlet 93. In this embodiment of the invention, the secondary filter 94 is a replaceable cartridge filter and is rated to remove particles of 0.3 microns and greater from the air with an efficiency of 99.997%. The filter in this case is a pleated HEPA filter to British standards 5726;1979. Perforations 96 are provided in the cap 95 to permit air to be drawn therethrough.

Operation of the cabinet 90 is substantially identical to the operation of the cabinet 1 with the exception that an individual carrying out tests wishing to handle or manipulate the material in the working chamber 18 does so through the gloves 92.

The advantage of the cabinet 90 according to this embodiment of the invention is that as well as protecting the environment from fumes, vapours or the like from the article or material under test, the individual carrying out the test is also protected by virtue of the fact that the entire working chamber is substantially totally sealed relative to the individual carrying out the test. A further and particularly important advantage of the cabinet 90 is that the environment within the working chamber 18 of the cabinet is a clean air environment by virtue of the fact that air drawn through the inlet 93 is filtered as it is drawn into the working chamber 18.

To facilitate portability of the cabinets 1 and 90 described with reference to Figs. 1 to 11, the diameter of the support housing 5 of each cabinet is 450 millimetres, while the maximum diameter of the main housing 4 is 540 millimetres. The overall height of the cabinets from the base member 30 of the support housing 5 to the top of the upper shell 6 of the main housing 4 is 550 millimetres, while the height of the support housing 5 is 120 millimetres.

While the cabinets described with reference to the various embodiments of the invention have been described as comprising a main housing and a support housing, the cabinets may be provided with any other suitable type of housing. Needless to say, while it is preferable, it is not essential that the main housing be of substantially spherical shape, any other shape of main housing may be provided. Furthermore, it will be appreciated that it is not essential that the entire main housing be of transparent material. The main housing may be provided with windows of transparent material or the like. Further, the main housing may be of any other material. Needless to say, the support housing may be of any other suitable material and shape.

It will of course be appreciated that any other communicating means communicating the first and second port means may be provided and it will of course be appreciated that the fan may be mounted in any desired location in the communicating means.

Needless to say, the main filter may be mounted upstream or downstream of the fan. The advantage of mounting the main filter upstream of the fan is that it cleans the air before it reaches the fan.

Furthermore, while it is preferable, it is not essential that the main filter be replaceable. Needless to say, other suitable types of main filter may be used besides those described. Further, the secondary filter may be provided by other suitable types of filter besides that described. Indeed, in certain cases, it is envisaged that the cabinet 90 may be provided without the secondary filter. Furthermore, the inlet may be provided at any other suitable location.

While the cabinets have been described for carrying out tests or experiments, the cabinets may be used for many other purposes. Such uses will be well known to those skilled in the art.

It will of course be appreciated that the sensor means for monitoring air flow through the communicating means may be dispensed with, and where a sensor means is provided, any other suitable sensor means may be provided besides a thermistor. For example, in certain cases, a pressure sensor may be provided.

While the upper shell 6 and lower shell 7 have been described as being secured together by a hoop of U-shaped cross section, it is envisaged that the upper shell may be hingedly connected to the lower shell.

It is also envisaged that a filter may be provided on the exhaust outlet 50. Such a filter may be to the specification of the main filter or to a different specification.

It is also envisaged that an ultra-violet light may be provided in the working chamber for providing a sterile environment in the working chamber.

It is also envisaged that an inert gas supply, or indeed, any other desired gas supply may be connected to either the inlet to the working chamber of the cabinet 90 or to the access openings of the cabinet 1 or 90 to provide a gas other than air in the working chamber.

A further advantage of the safety cabinets according to the invention is that where they are used in a clean room, the air being returned to the clean room through the exhaust outlet is also clean. For example, if any of the cabinets are used in a clean room with class 100 air therein, the cabinets according to the invention also return exhaust air through the outlet to a standard of class 100. The main filters in both cases are selected to provide class 100 air to be delivered through the exhaust outlet. However, it will be appreciated that it is not essential that the air being delivered through the exhaust outlet should be to class 100 standard. Furthermore, the secondary filter may be sized to provide class 100 air in the working chamber of the cabinet 90.

It will of course be appreciated that while the microprocessor increases the speed of the motor in response to a drop in velocity of air passing through the communicating means, the micro-processor may also reduce the speed of the motor in response to an increase in velocity of air passing through the communicating means.

## Claims

1. A safety cabinet (1) of the type comprising a housing (4,5) defining a working chamber (18) within which a negative pressure is created relative to atmosphere, characterised in that the housing (4,5) is portable, and the housing defines a substantially enclosed working chamber (18) and is constructed at least partly of transparent material for facilitating visual inspection of the working chamber (18), and the cabinet (1) comprises first port means (24) communicating with the working chamber (18), second port means (50) communicating with atmosphere, communicating means (54,56,58) communicating the first port means (24) and the second port means (50), air transfer means (51) being provided in the communicating means (54,56,58) for withdrawing air from the working chamber (18) and delivering the air through the second port means (50) for creating the negative pressure in the working chamber (18), main filter means (63) being provided in the communicating means (54,56,58) for filtering air passing through the communicating means (54,56,58), and access means (23) being provided in the housing (4,5) to the working chamber (18) for accommodating a hand or the like.

2. A safety cabinet as claimed in Claim 1 characterised in that the main filter means (63) is mounted in the communicating means (54,56,58) intermediate the air transfer means (51) and the first port means (24).

3. A safety cabinet as claimed in Claim 1 or 2 characterised in that the main filter means (63) is a filter provided to British standard 5726:1978.

4. A safety cabinet as claimed in any preceding claim characterised in that the communicating means (54,56,58) comprises a duct (54,56) extending between the air transfer means (51) and the first port means (24), the main filter means (63) being releasably mounted in the duct (54,56), an opening (65) being provided to the duct (54,56) for replacing the main filter means (63), and a closure member (67) releasably and sealably closing the said opening (65) in the duct (54,56).

5. A safety cabinet as claimed in any preceding claim characterised in that a sensor means (86) is provided in the communicating means (54,56,58) for monitoring air flow through the communicating means (54,56,58) for determining the condition of the main filter means (63), and alerting means (87,88) are provided for indicating that the main filter means (63) requires replacement, the alerting means (87,88) being responsive to the sensor means (86).

6. A safety cabinet as claimed in any preceding claim characterised in that the air transfer means (51) comprises a fan (51), the fan (51) being driven by an electric motor (53).

7. A safety cabinet as claimed in Claim 6 characterised in that a control means (73,74) for controlling the electric motor (53) is provided, the control means (73,74) being responsive to the sensor means (86) for varying the speed of the motor (53) in response to a variation in air velocity passing through the communicating means (54,56,58).

8. A safety cabinet as claimed in any preceding claim characterised in that the access means (23) comprises an access opening (23) formed in the housing (4,5) to the working chamber (18), and a sleeve (91) extends from the access opening (23) into the working chamber (18) and sealably closes the access opening (23), the sleeve (91) terminating in a glove (92).

9. A safety cabinet as claimed in any preceding claim characterised in that the housing (4,5) comprises third port means (93), the third port means (93) communicating with the working chamber, and a secondary filter means (94) being provided in the third port means (93).

10. A safety cabinet as claimed in any preceding claim characterised in that the housing (4,5) comprises a main housing (4), and a support housing (5) supporting the main housing (4), the main housing (4) forming the working chamber (18) and being of substantially spherical shape, the support housing (5) housing the air transfer means (51) and the main filter means (63).

Fig 1

Fig 2

EP 0 456 420 A1

Fig 3

12

Fig 4

53 61 57 54 60 61

52

55

5

32

32

34 29 Fi̶g 5 51 30 34

96 96 94

95

93

Fi̶g 11

6

EP 0 456 420 A1

Fig6

Fig 7

Fig 8

EP 0 456 420 A1

Fig 9

Fig 10

**European Patent Office**

**EUROPEAN SEARCH REPORT**

Application Number

EP 91 30 3996

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 490 990 (FRANTZ) <br> * page 1, line 15 - line 32 * | 1,2,10 | B25J21/02 <br> B01L1/04 <br> F24F3/16 |
| Y | | 5,6,9 | |
| Y | US-A-3 536 370 (EVANS) <br> * column 4, line 69 - column 5, line 11 * <br> * column 6, line 16 - line 32 * <br> * column 7, line 34 - line 51 * | 5,6 | |
| Y | FR-A-2 293 288 (CADROT) <br> * page 3, line 9 - line 21 * | 9 | |
| A | US-A-3 402 530 (AGNON) <br> * column 2, line 29 - line 37 * | 4 | |
| A | US-A-4 530 272 (STOKES) <br> * column 2, line 12 - line 19 * <br> * column 2, line 55 - line 59 * | 6,7 | |
| A | FR-A-1 147 608 (GICQUEL) | | **TECHNICAL FIELDS SEARCHED (Int. Cl.5)** |
| A | US-A-3 410 619 (DELNAY) | | |
| A | US-A-3 267 830 (VAN GAASBEEK) | | B25J <br> B01L |
| A | US-A-3 134 637 (BASHLOW) | | F24F <br> G21F |

The present search report has been drawn up for all claims

| Place of search | Date of completion of the search | Examiner |
|---|---|---|
| THE HAGUE | 01 AUGUST 1991 | LAMMINEUR P.C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document